# EUROPÄISCHE PATENTSCHRIFT

(11) **EP 1 205 427 B1**
(45) Veröffentlichungstag und Bekanntmachung des Hinweises auf die Patenterteilung: **12.01.2005**
(21) Anmeldenummer: 01125724.3
(22) Anmeldetag: 27.10.2001
(51) Int. Cl.: B66F 9/075, B62D 33/06, B62D 51/02

(54) **Flurförderzeug mit einer elastisch abgestützten Standplattform**
Industrial truck with an elastically supported operator's platform
Chariot de manutention avec plate-forme d'opérateur élastiquement soutenue

(30) Priorität: 08.11.2000 DE 10055263
(43) Veröffentlichungstag der Anmeldung: 15.05.2002
(73) Patentinhaber: STILL S.A.R.L., 77100 Meaux (FR)
(72) Erfinder: Abonnet, Jacques, 58200 Cosne/Loire (FR); Wident, Alain, 60480 Froissy (FR)
(74) Vertreter: Lang, Michael

(56) Entgegenhaltungen:
- EP-A- 0 568 775
- DE-A- 4 411 470
- US-A- 3 774 711
- US-A- 5 579 859

## Beschreibung

Die Erfindung betrifft ein Flurförderzeug mit einer Standplattform, die als Ganzes auf einem Fahrzeugrahmen mittels Federelementen in vertikaler Richtung elastisch abgestützt ist.

Ein gattungsgemäßes Flurförderzeug ist aus der DE 44 11 470 A1 bekannt. Dort ist die Standplattform auf vier Federelementen in Form von gummielastischen Puffern abgestützt. In zwei der Puffer ist eine Vertikalführung integriert. Dabei sind in diesen Puffern zentrische Ausnehmungen vorgesehen, in die jeweils ein an der Unterseite der Standplattform befestigter Zapfen eingreift. Dadurch wird die Standplattform gegen seitliches Verrutschen und Verdrehen auf dem Fahrzeugrahmen gesichert. Allerdings sind - bedingt durch die Führung der Standplattform mittels Zapfen in elastischen Puffern - nach wie vor geringfügige schwimmende Bewegungen der Standplattform in seitlicher Richtung möglich.

Bei Flurförderzeugen, die eine einseitig schwenkbar gelagerte Fahrerplattform besitzen, wie in der US 5,579,859 gezeigt, ist eine seitliche Bewegung unterbunden.

Für ebenfalls nicht gattungsgemäße Fahrzeuge ist aus der US 3,774,711 eine gefederte Plattform mit einem Fahrersitz bekannt, bei der jedoch die Federelemente vorzugsweise als von den Führungselementen getrennt Schraubenfedern ausgeführt sind.

Der vorliegenden Erfindung liegt die Aufgabe zu Grunde, ein gattungsgemäßes Flurförderzeug zur Verfügung zu stellen, dessen Standplattform exakter geführt ist und eine größere Variabilität hinsichtlich der elastischen Abstützung auf dem Fahrzeugrahmen aufweist.

Diese Aufgabe wird erfindungsgemäß dadurch gelöst, dass von den Federelementen getrennte Führungsmittel vorgesehen sind, wobei mindestens ein Federelement einen um eine Schwenkachse verdrehbaren Hebel aufweist, dessen eines Ende an der Unterseite der Standplattform mittels einer Rolle abgestützt ist und dessen anderes Ende mit einer Feder-Dämpfer-Einheit in Wirkverbindung steht. Durch die Trennung der Funktionen "Federn" und "Führen" ist es möglich, die erforderlichen Bauteile konsequent im Hinblick auf die zu übernehmende Funktion zu optimieren, ohne Kompromisse eingehen zu müssen. Es ist ferner leicht möglich, die elastische Lagerung der Standplattform auf unterschiedliche Belastungen einzustellen. Hierzu bedarf es lediglich der Anpassung oder des Austausches der Federelemente, während die Führungselemente unverändert bleiben können.

Gemäß einer vorteilhaften Ausgestaltung der Erfindung umfassen die Führungsmittel zwei parallel zueinander angeordnete Kreuzstreben, die jeweils aus zwei Stangen bestehen, die durch ein mittig angeordnetes Gelenk miteinander verbunden sind, wobei die auf der einen Seite des Gelenks angeordneten Stangenenden mit der Standplattform beziehungsweise dem Fahrzeugrahmen gelenkig verbunden sind und die auf der anderen Seite des Gelenks angeordneten Stangenenden mittels jeweils einer Rolle gegenüber der Standplattform beziehungsweise gegenüber dem Fahrzeugrahmen abgestützt sind.

Diese Anordnung ermöglicht einerseits eine exakte Führung der Standplattform, andererseits sind große Federwege erzielbar. Es wird eine präzise Führung der Standplattform erzielt, die während des Ein- und Ausfederns stets horizontal, also parallel zum darunterliegenden Fahrzeugrahmen geführt ist.

Sofern die Kreuzstreben jeweils im Bereich des Gelenks durch eine Querstrebe miteinander verbunden sind, ergibt sich eine große Stabilität der beschriebenen Anordnung und folglich eine präzise Führung der Standplattform.

Die Feder-Dämpfer-Einheit ist zweckmäßigerweise auf Torsion beanspruchbar.

Um auf möglichst einfache Weise eine Feder- und eine Dämpfungswirkung zu erzielen, ist eine Weiterbildung der Erfindung günstig, bei der die Feder-Dämpfer-Einheit gummi-elastische Bauteile enthält. Darüber hinaus kann durch Hinzufügen oder Weglassen von gummi-elastischen Bauteilen mit minimalem Aufwand die Federung der Standplattform auf unterschiedliche Belastungen eingestellt werden.

Gemäß einer vorteilhaften Ausgestaltung der Erfindung sind zumindest zwei zueinander und zu den Kreuzstreben parallele Federelemente vorgesehen. Sofern zwischen der Standplattfom und dem Fahrzeugrahmen mindestens ein elastischer Anschlagpuffer angeordnet ist, wird am Ende des Federweges die Standplattform gedämpft abgefangen.

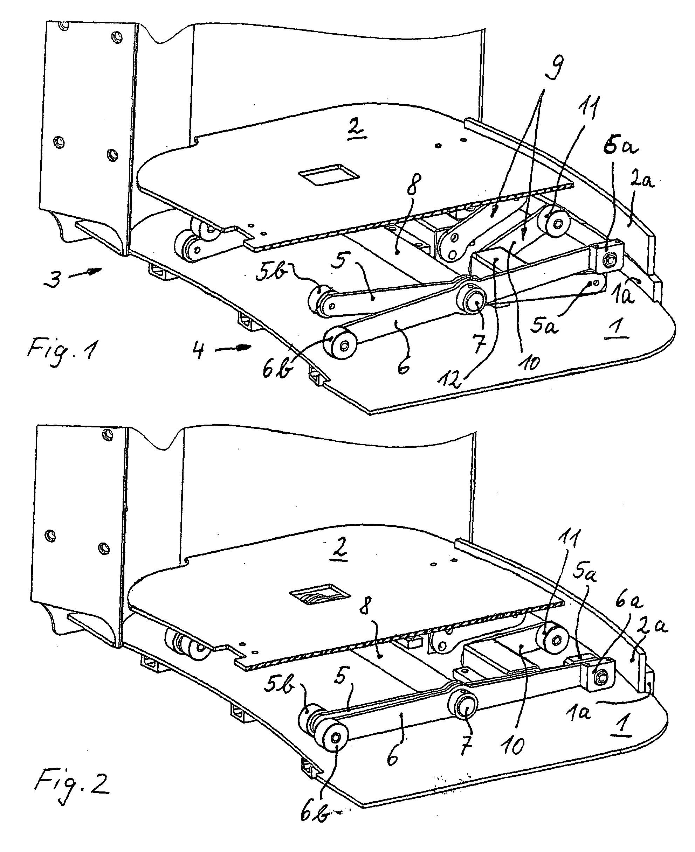

Weitere Vorteile und Einzelheiten der Erfindung werden anhand des in den schematischen Figuren dargestellten Ausführungsbeispieles näher erläutert. Dabei zeigt
- Figur 1: eine perspektivische Darstellung der Standplattform eines Flurförderzeugs in ausgefederter Stellung und
- Figur 2: die Standplattform gemäß Figur 1 in eingefederter Stellung.

Das erfindungsgemäße Flurförderzeug kann beispielsweise als Kommissionierfahrzeug ausgebildet sein und weist ein Bodenblech eines Fahrzeugrahmens 1 auf sowie eine darauf abgestützte Standplattform 2. Zwischen der Fahrerplattform 1 und der Standplattform 2 sind Führungsmittel in Form zweier parallel zueinander angeordneter Kreuzstreben 3 und 4 vorgesehen. Jede Kreuzstrebe 3 bzw. 4 besteht aus zwei Stangen 5 und 6, die durch ein mittig angeordnetes Gelenk 7 miteinander verbunden sind.

Das auf der einen Seite des Gelenks 7 angeordneten Stangenende 5a der Stange 5 ist mit der Standplattform 2 gelenkig verbunden. Das auf derselben Seite des Gelenks 7 angeordnete Stangenende 6a der Stange 6 ist mit dem Fahrzeugrahmen 1 gelenkig verbunden.

Das auf der anderen Seite des Gelenks 7 angeordnete Stangenende 5b ist mit einer Rolle versehen und gegenüber der Standplattform 2 abgestützt. Das auf derselben Seite des Gelenks 7 befindliche Stangenende 6b weist ebenfalls eine Rolle auf und ist durch diese Rolle gegenüber dem Fahrzeugrahmen 1 abgestützt.

Die beiden Kreuzstreben 3 und 4 sorgen während des Ein- und Ausfederns für eine Parallelbewegung der Standplattform 2 zum Fahrzeugrahmen 1. Eine im Bereich des Gelenks 7 angeordnete Querstrebe 8, mit der beide Kreuzstreben 3 und 4 verbunden sind, wirkt stabilitätserhöhend.

Zwischen den Kreuzstreben 3 und 4 sind zwei Federelemente 9 angeordnet, die zueinander und zu den Kreuzstreben 3 und 4 parallel ausgerichtet sind. Jedes Federelement 9 besteht aus einem Hebel 10, dessen eines Ende an der Unterseite der Standplattform 2 mittels einer Rolle 11 abgestützt ist. Das andere Ende des um eine Schwenkachse drehbaren Hebels 10 steht mit einer auf Torsion beanspruchbaren Feder-Dämpfer-Einheit 12 in Wirkbindung. Diese weist ein Gehäuse auf, in dem sich gummi-elastische Bauteile befinden.

Bei Belastung der Standplattform 2 durch eine Bedienperson werden die Federelemente 9 in Richtung zum Fahrzeugrahmen belastet. Die Feder-Dämpfer-Einheiten 12 üben dabei durch die Hebel 11 eine der Belastung entgegengesetzte Kraft aus, die je nach Anzahl und Bauart der verwendeten gummi-elastischen Bauteile variiert werden kann.

Auf der Unterseite der Standplattform 2 ist mindesten ein in den Figuren nicht dargestellter, elastischer Anschlagpuffer befestigt. Die Standplattform ist ferner mit einer Schürze 2a versehen, die zusammen mit einem Seitenblech 1a des Fahrzeugrahmens 1 die unter der Standplattform 2 angeordneten Führungs- und Federungsmittel nach außen abschirmt.

## Patentansprüche

1. Flurförderzeug mit einer Standplattform, die als Ganzes auf einem Fahrzeugrahmen mittels Federelementen in vertikaler Richtung elastisch abgestützt ist, **dadurch gekennzeichnet, dass** von den Federelementen (9) getrennte Führungsmittel vorgesehen sind, wobei mindestens ein Federelement (9) einen um eine Schwenkachse verdrehbaren Hebel (10) aufweist, dessen eines Ende an der Unterseite der Standplattform (2) mittels einer Rolle (11) abgestützt ist und dessen anderes Ende mit einer Feder-Dämpfer-Einheit (12) in Wirkverbindung steht.

2. Flurförderzeug nach Anspruch 1, **dadurch gekennzeichnet, dass** die Führungsmittel zwei parallel zueinander angeordnete Kreuzstreben (3, 4) umfassen, die jeweils aus zwei Stangen (5, 6) bestehen, die durch ein mittig angeordnetes Gelenk (7) miteinander verbunden sind, wobei die auf der einen Seite des Gelenks (7) angeordneten Stangenenden (5a, 6a) mit der Standplattform (2) beziehungsweise dem Fahrzeugrahmen (1) gelenkig verbunden sind und die auf der anderen Seite des Gelenks (7) angeordneten Stangenenden (5b, 6b) mittels jeweils einer Rolle gegenüber der Standplattform (2) beziehungsweise gegenüber dem Fahrzeugrahmen (1) abgestützt sind.

3. Flurförderzeug nach Anspruch 2, **dadurch gekennzeichnet, dass** die Kreuzstreben (3, 4) jeweils im Bereich des Gelenks (7) durch eine Querstrebe (8) miteinander verbunden sind.

4. Flurförderzeug nach einem der Ansprüche 1 bis 3, **dadurch gekennzeichnet, dass** die Feder-Dämpfer-Einheit (12) auf Torsion beanspruchbar ist.

5. Flurförderzeug nach einem der Ansprüche 1 bis 4, **dadurch gekennzeichnet, dass** die Feder-Dämpfer-Einheit (12) gummi-elastische Bauteile enthält.

6. Flurförderzeug nach einem der Ansprüche 1 bis 5, **dadurch gekennzeichnet, dass** zumindest zwei zueinander und zu den Kreuzstreben (3, 4) parallele Federelemente (9) vorgesehen sind.

7. Flurförderzeug nach einem der Ansprüche 1 bis 6, **dadurch gekennzeichnet, dass** zwischen der Standplattfom (2) und dem Fahrzeugrahmen (1) mindestens ein elastischer Anschlagpuffer angeordnet ist.

## Claims

1. Industrial truck having an operator's platform which, as a whole, is supported elastically in the vertical direction on a vehicle frame by means of spring elements, **characterized in that** guide means which are separate from the spring elements (9) are provided, at least one spring element (9) having a lever (10) which can be rotated about a pivot axis, whose one end is supported on the underside of the operator's platform (2) by means of a roller (11) and whose other end is operatively connected to a spring-damper unit (12).

2. Industrial truck according to Claim 1, **characterized in that** the guide means comprise two cross struts (3, 4) which are arranged parallel to each other and each comprise two rods (5, 6) which are connected to each other by a centrally arranged joint (7), the rod ends (5a, 6a) arranged on one side of the joint (7) being connected in an articulated manner to the operator's platform (2) and the vehicle frame (1), respectively, and the rod ends (5b, 6b) arranged on the other side of the joint (7) being supported with respect to the operator's platform (2) and with respect to the vehicle frame (1), respectively, by means of a roller in each case.

3. Industrial truck according to Claim 2, **characterized in that** the cross struts (3, 4) are in each case connected to each other in the region of the joint (7) by a transverse strut (8).

4. Industrial truck according to one of Claims 1 to 3, **characterized in that** the spring-damper unit (12) can be stressed in torsion.

5. Industrial truck according to one of Claims 1 to 4, **characterized in that** the spring-damper unit (12) contains resilient components.

6. Industrial truck according to one of Claims 1 to 5, **characterized in that** at least two spring elements (9) that are parallel to one another and to the cross struts (3, 4) are provided.

7. Industrial truck according to one of Claims 1 to 6, **characterized in that** at least one elastic stop buffer is arranged between the operator's platform (2) and the vehicle frame (1).

## Revendications

1. Chariot de manutention avec plate-forme d'opérateur, qui en tant qu'unité complète est élastiquement soutenue en direction verticale sur un châssis de véhicule par des éléments à ressort, **caractérisé en ce que** des moyens de guidage séparés des éléments à ressort (9) sont prévus, au moins un élément à ressort (9) étant muni d'un levier (10) rotatif autour d'un axe de rotation, dont l'une des extrémités est soutenue sur la face inférieure de la plate-forme d'opérateur (2) par un galet (11) et dont l'autre extrémité est en liaison active avec une unité ressort-amortisseur (12).

2. Chariot de manutention selon la revendication 1, **caractérisé en ce que** les moyens de guidage comprennent deux montants croisés (3, 4) disposés en parallèle l'un par rapport à l'autre, qui sont chacun constitués de deux barres (5, 6), qui sont reliées entre elles par une articulation (7) disposée au centre, les extrémités de barres (5a, 6a) situées sur l'un des côtés de l'articulation (7) étant reliées de façon articulée avec la plate-forme d'opérateur (2) ou avec le châssis de véhicule (1) et les extrémités de barres (5b, 6b) disposées sur l'autre côté de l'articulation (7) étant soutenues par respectivement un galet par rapport à la plate-forme d'opérateur (2) ou par rapport au châssis de véhicule (1).

3. Chariot de manutention selon la revendication 2, **caractérisé en ce que** les montants croisés (3, 4) sont reliés respectivement dans la zone de l'articulation (7) par un montant transversal (8).

4. Chariot de manutention selon l'une quelconque des revendications 1 à 3, **caractérisé en ce que** l'unité ressort-amortisseur (12) peut être soumise à une torsion.

5. Chariot de manutention selon l'une quelconque des revendications 1 à 4, **caractérisé en ce que** l'unité ressort-amortisseur (12) contient des éléments élastique du type caoutchouc.

6. Chariot de manutention selon l'une quelconque des revendications 1 à 5, **caractérisé en ce qu'**au moins deux éléments à ressort (9) parallèles entre eux et parallèles aux montants croisés (3, 4) sont prévus.

7. Chariot de manutention selon l'une quelconque des revendications 1 à 6, **caractérisé en ce qu'**au moins un tampon de butée élastique est disposé entre la plate-forme d'opérateur (2) et le châssis de véhicule (1).
